# EUROPÄISCHE PATENTSCHRIFT

(11) **EP 4 002 038 B1**
(45) Veröffentlichungstag und Bekanntmachung des Hinweises auf die Patenterteilung: **17.09.2025**
(21) Anmeldenummer: 20207449.8
(22) Anmeldetag: 13.11.2020
(51) Int. Cl.: G05B 23/02, H04W 12/08, H04W 12/06, G05B 19/418, G06F 21/44, H04L 67/12, G06F 21/40, G06F 21/62, H04L 9/40

(54) **VORRICHTUNG ZUM SCHÜTZEN EINES ZUGRIFFS FÜR SEGMENTE IN VERTEILTEN SYSTEMEN**
DEVICE FOR PROTECTING ACCESS FOR SEGMENTS IN DISTRIBUTED SYSTEMS
DISPOSITIF DE PROTECTION D'UN ACCÈS AUX SEGMENTS DANS LES SYSTÈMES DISTRIBUÉS

(43) Veröffentlichungstag der Anmeldung: 25.05.2022
(73) Patentinhaber: VEGA Grieshaber KG, 77709 Wolfach (DE)
(72) Erfinder: ISENMANN, Andreas, 77716 Haslach im Kinzigtal (DE); HENGSTLER, Clemens, 77716 Haslach (DE); BURGERT, Florian, 77723 Gengenbach (DE)
(74) Vertreter: Maiwald GmbH

(56) Entgegenhaltungen:
- DE-A1- 102014 105 076
- US-A1- 2009 060 192
- US-A1- 2014 273 847
- US-A1- 2016 063 785
- US-A1- 2016 119 284
- US-A1- 2020 228 981

## Beschreibung

### Gebiet der Erfindung

Die Erfindung betrifft eine Vorrichtung zum Schützen eines Zugriffs für Segmente in verteilten Systemen nach Anspruch 1.

Ferner betrifft die vorliegende Erfindung ein Verfahren nach Anspruch 10 zum Schützen eines Zugriffs für ein Segment in verteilten Systemen sowie ein entsprechendes Programmelement und ein entsprechendes computerlesbares Speichermedium.

### Hintergrund

Eine zentrale Benutzerverwaltung in verteilten Systemen kann beispielsweise mit dem sogenannten Lightweight Directory Access Protocol erfolgen, einem Protokollstandard zur Abfrage und Modifikation von Informationen eines Verzeichnisdienstes, auch als Active Directory bezeichnet.

In der US 2016/119284 A1 werden Systeme und Techniken zur Gewährung des Netzzugangs für ein neues Netzgerät beschrieben.

Insbesondere werden verschiedene Techniken und Systeme bereitgestellt, um ein neues Netzwerkgerät mit einem Netzwerk zu verbinden und den Zugang des Netzwerkgeräts zu begrenzen, während das neue Netzwerkgerät authentifiziert wird. Beispielhafte Ausführungsformen umfassen ein computerimplementiertes Verfahren. Das Verfahren umfasst das Empfangen einer Kommunikation an einem Gateway in einem Netzwerk, die eine Anforderung für ein neues Netzwerkgerät enthält, dem Netzwerk beizutreten; das Herstellen einer Verbindung zwischen dem neuen Netzwerkgerät und dem Gateway.

Dokument US 2016 063 785 A1 beschreibt ein Verfahren zur Authentifizierung einer ersten Einheit, insbesondere eines Mobilgerätes, auf einem zweite gemäß, insbesondere einem Feldgerät, in einem System der Prozessautomatisierung. Dokument US 2020 228 981 A1 betrifft das Gebiet der Kommunikationstechnik, insbesondere ein Verfahren und ein Gerät zur Authentifizierung.

Dokument US 2009 060 192 A1 betrifft Kommunikationsnetzwerke, insbesondere ein Verfahren und ein Gerät zur Gewährung von Sicherheit (security) in drahtlosen Kommunikationsnetzwerken.

Nach aktuellem Stand der Technik wird jedes Feldgerät mit einem individuellen Zugangscode und einem individuellen Code zur Verriegelung der Parametrierung ausgerüstet.

Werden in einer Prozessanlage eine Vielzahl von Sensoren eingesetzt, muss für jeden einzelnen Sensor der jeweils gültige Zugangscode eingegeben werden, was zwar für eine hohe Sicherheit sorgt aber in der Anwendung eine gewisse Hürde darstellt.

### Zusammenfassung der Erfindung

Es ist eine Aufgabe der vorliegenden Erfindung, eine verbesserte Vorrichtung zum Schützen eines Zugriffs für Segmente in verteilten Systemen bereitzustellen.

Die vorliegende Erfindung ermöglicht, eine Überprüfung der Zugangsdaten durch alle in einem Segment zusammengefassten Feldgeräte bereitzustellen.

Diese Aufgabe wird durch die Merkmale der unabhängigen Patentansprüche gelöst. Weiterbildungen der Erfindung ergeben sich aus den Unteransprüchen und der folgenden Beschreibung von Ausführungsformen.

Ein erster Aspekt der Erfindung betrifft eine Vorrichtung zum Schützen eines Zugriffs für ein Segment in verteilten Systemen, wobei die Vorrichtung aufweist: eine Eingabeeinrichtung, welche dazu ausgebildet ist, Zugangsdaten für ein erstes Feldgerät zu erfassen.

Ferner umfasst die erfindungsgemäße Vorrichtung eine Verifizierungseinrichtung, welche dazu ausgebildet ist, die erfassten Zugangsdaten von einem zweiten Feldgerät zu verifizieren, wobei das erste Feldgerät und das zweite Feldgerät zu dem Segment gekoppelt sind.

Die vorliegende Erfindung ermöglicht vorteilhaft, dass die Verbindung zu einem Segment mit einer Vielzahl von Feldgeräten zu jedem Feldgerät in diesem Segment auch dann hergestellt werden kann, wenn der Zugangscode zu einem Feldgerät des Segments bekannt ist.

Hierzu werden bei der Verbindungsaufnahme zu einem Feldgerät die erforderlichen Zugangsdaten von allen zu einem Segment gekoppelten Feldgeräten auf Korrektheit überprüft. Wenn ein Feldgerät aus dem Segment bestätigt, dass die Zugangsdaten korrekt sind, wird der Zugang zu dem gewünschten Feldgerät ermöglicht.

Die vorliegende Erfindung ermöglicht vorteilhaft, dass ein sicherer und dennoch einfacher Zugang zu einem Feldgerät bereitgestellt wird.

Gemäß einer Ausführungsform der Erfindung ist vorgesehen, dass die Verifizierungseinrichtung dazu ausgebildet ist, mit den Zugangsdaten einen Zugang zu dem ersten Feldgerät und/oder dem zweiten Feldgerät ermöglichen.

Gemäß einer Ausführungsform der Erfindung ist vorgesehen, dass die Verifizierungseinrichtung dazu ausgebildet ist, mit den Zugangsdaten den Zugang temporär zu ermöglichen.

Gemäß einer Ausführungsform der Erfindung ist vorgesehen, dass die Verifizierungseinrichtung dazu ausgebildet ist, mit den Zugangsdaten den Zugang temporär für eine vorbestimmte Zeitspanne und/oder für eine vorbestimmte Prozesssequenz zu ermöglichen. Als die Prozesssequenz kann dabei eine Abfolge von Programmschritten zum Bereitstellen eines Zugangs zu einem Feldgerät umfasst sein.

Gemäß einer Ausführungsform der Erfindung ist vorgesehen, dass die Verifizierungseinrichtung dazu ausgebildet ist, die erfassten Zugangsdaten für den Zugang zu dem ersten Feldgerät des Segmentes durch alle Feldgeräte des Segments zu verifizieren.

Gemäß einer Ausführungsform der Erfindung ist vorgesehen, dass die Vorrichtung als Security-Server ausgebildet ist.

Ein weiterer Aspekt der Erfindung betrifft ein Verfahren zum Schützen eines Zugriffs für ein Segment in verteilten Systemen.

Als ein erster Schritt des Verfahrens zum Schützen eines Zugriffs für ein Segment in verteilten Systemen erfolgt ein Erfassen von Zugangsdaten für ein erstes Feldgerät.

Als ein zweiter Schritt des Verfahrens zum Schützen eines Zugriffs für ein Segment in verteilten Systemen erfolgt ein Verifizieren der erfassten Zugangsdaten von einem zweiten Feldgerät, wobei das erste Feldgerät und das zweite Feldgerät zu dem Segment gekoppelt sind.

An dieser Stelle sei darauf hingewiesen, dass gemäß einem weiteren Aspekt der Erfindung die oben und im Folgenden im Hinblick auf das Feldgerät bzw. auf die Vorrichtung beschriebenen Merkmale auch als Verfahrensschritte implementiert werden können.

Ebenso können die oben und im Folgenden beschriebenen Verfahrensschritte von bestimmten Ausführungsformen des Feldgeräts bzw. der Vorrichtung durchgeführt werden.

Gemäß einem weiteren Aspekt der Erfindung ist ein Programmelement angegeben, das, wenn es auf einem Prozessor des Feldgeräts bzw. der Vorrichtung ausgeführt wird, das Feldgerät bzw. Vorrichtung umfassend die erfindungsgemäße Vorrichtung zum Schützen eines Zugriffs für ein Segment anleitet, die oben und im Folgenden beschriebenen Schritte durchzuführen.

Gemäß einer weiteren Ausführungsform der Erfindung ist ein computerlesbares Medium angegeben, auf dem ein oben beschriebenes Programmelement gespeichert ist.

Das Programmelement kann Teil einer Software sein, die auf einem Prozessor gespeichert ist. Weiterhin umfasst diese Ausführungsform der Erfindung ein Programmelement, welches dem Verfahren bzw. einzelnen der oben und im Folgenden beschriebenen Verfahrensschritte.

Gemäß einer weiteren Ausführungsform der Erfindung kann das verteilte System umfassend die erfindungsgemäße Vorrichtung zum Schützen eines Zugriffs für ein Segment als verteilte Computerumgebung verwirklicht werden.

Gemäß einer weiteren Ausführungsform der Erfindung kann das verteilte Systemumfassend die erfindungsgemäße Vorrichtung zum Schützen eines Zugriffs für ein Segment als ein vernetztes Client-Server-System mit einem Smartphone als Client, der Zugriff auf Feldgeräte oder Füllstandsmessgeräte und auf Speicher- oder Verarbeitungsressourcen in einer Computer-Cloud hat.

Der Begriff "Computer-Cloud", auf Deutsch Rechnerwolke oder Datenwolke, bezeichnet dabei eine IT-Infrastruktur, die beispielsweise über das Internet verfügbar gemacht wird.

Gemäß einer weiteren Ausführungsform der Erfindung kann das verteilte System umfassend die erfindungsgemäße Vorrichtung zum Schützen eines Zugriffs für ein Segment als ein vernetztes heterogenes oder homogenes Computernetzwerk mit mindestens zwei Vorrichtungen nach dem ersten Aspekt und/oder einer Vielzahl von Feldgeräten oder Füllstandsmessgeräten ausgebildet sein, die über das Computernetzwerk oder beispielsweise auch als ein Ad-hoc-Netz interagieren oder per Internet vernetzt sind.

Gemäß einer weiteren Ausführungsform der Erfindung kann das Computernetzwerk umfassend die erfindungsgemäße Vorrichtung zum Schützen eines Zugriffs in Computernetzwerksegmente unterteilt sein.

Im Folgenden werden mit Verweis auf die Figuren weitere Ausführungsformen der Erfindung beschrieben. Werden in der folgenden Figurenbeschreibung dieselben Bezugszeichen verwendet, so bezeichnen diese gleiche oder ähnliche Elemente. Die Darstellungen in den Figuren sind schematisch und nicht maßstäblich.

### Kurze Beschreibung der Figuren

Fig. 1 zeigt eine Vorrichtung zum Schützen eines Zugriffs für ein Segment in verteilten Systemen gemäß einer Ausführungsform der Erfindung.
Fig. 2 zeigt eine Vorrichtung zum Schützen eines Zugriffs für ein Segment in verteilten Systemen gemäß einer Ausführungsform der Erfindung.
Fig. 3 zeigt ein Flussdiagramm eines Verfahrens zum Schützen eines Zugriffs für ein Segment in verteilten Systemen gemäß einer Ausführungsform der Erfindung.

### Detaillierte Beschreibung von Ausführungsformen

### Beschreibung von Ausführungsbeispielen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

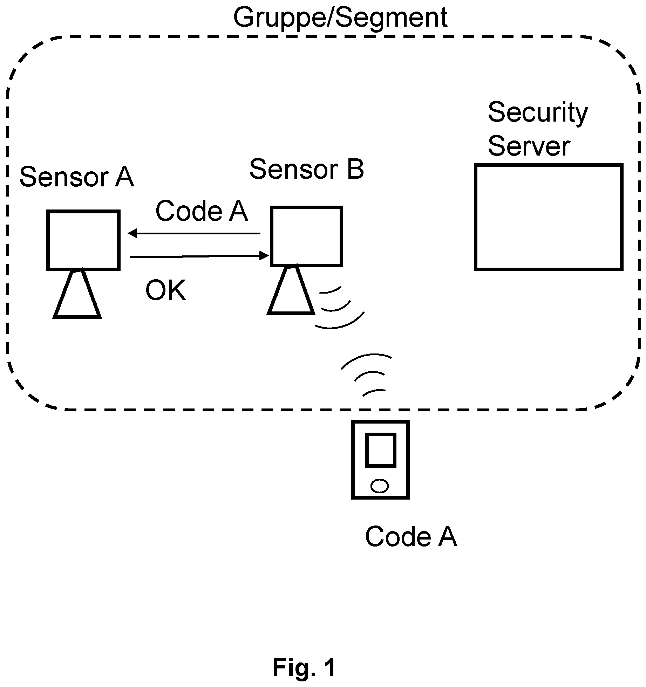

Fig. 1 zeigt eine Vorrichtung zum Schützen eines Zugriffs für ein Segment in verteilten Systemen gemäß einer Ausführungsform der Erfindung.

Gemäß einer Ausführungsform der Erfindung ist vorgesehen, dass eine Überprüfung der Zugangsdaten für den Zugang zu einem Feldgerät eines Segmentes durch alle oder zumindest durch einen vorbestimmten Anteil der Feldgeräte des Segments erfolgt, etwa mehr als die Hälfte oder ein Drittel.

Gemäß einer Ausführungsform der Erfindung ist vorgesehen, dass im Falle einer Übereinstimmung der Zugangsdaten mit den in einem Feldgerät hinterlegten Zugangsdaten, der Zugang ermöglicht wird.

Gemäß einer Ausführungsform der Erfindung ist vorgesehen, dass im Falle einer Integration eines Security-Servers in das Segment der Feldgeräte vorgesehen ist, dass dieser Security-Server zentral den Zugang zu den Sensoren im Segment ermöglichen kann.

Gemäß einer Ausführungsform der Erfindung ist vorgesehen, dass eine temporäre Freigabe erfolgt, z.B. für einen Servicetechniker für alle Feldgeräte des Segments in dem ein zeitlich begrenzter Zugangscode auf einem der Feldgeräte oder auf dem Security-Server eingerichtet wird.

Gemäß einer Ausführungsform der Erfindung ist vorgesehen, dass jedes Feldgerät in mehreren Segmenten enthalten sein kann. Dadurch kann gesteuert werden, welche Zugangsdaten auf welche Feldgeräte wirken dürfen.

Für ein Feldgerät A müssen dann beispielsweise die Zugangsdaten aus einem Feldgerät von Segment A bekannt sein, wobei für ein Feldgerät B die Zugangsdaten von Segment A und Segment B verwendet werden können, wenn Feldgerät A nur Teil von Segment A, Feldgerät B hingegen Teil der Segmente A und B ist.

Gemäß einer Ausführungsform der Erfindung sind die Feldgeräte als Feldgeräte für die Prozessautomatisierung ausgebildet, insbesondere zur Ermittlung einer Prozessgröße wie Füllstand oder Druck.

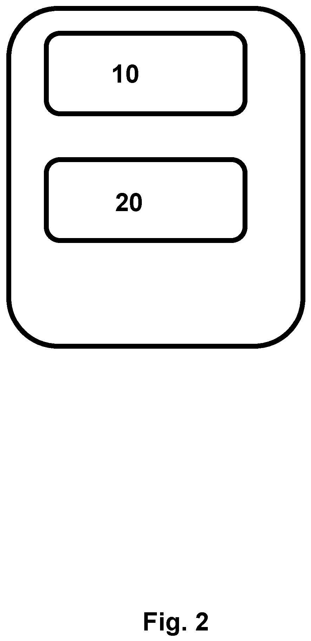

Fig. 2 zeigt eine Vorrichtung zum Schützen eines Zugriffs für ein Segment in verteilten Systemen gemäß einer Ausführungsform der Erfindung.

Die Vorrichtung zum Schützen eines Zugriffs für ein Segment in verteilten Systemen umfasst eine Eingabeeinrichtung 10 und eine Verifizierungseinrichtung 20.

Die Eingabeeinrichtung 10 ist dazu ausgebildet, Zugangsdaten für ein erstes Feldgerät zu erfassen.

Die Verifizierungseinrichtung 20 ist dazu ausgebildet, die erfassten Zugangsdaten von einem zweiten Feldgerät zu verifizieren, wobei das erste Feldgerät und das zweite Feldgerät zu dem Segment gekoppelt sind.

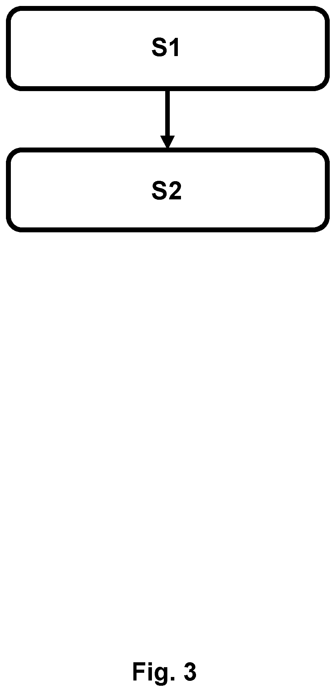

Fig. 3 ein Flussdiagramm eines Verfahrens zum Schützen eines Zugriffs für ein Segment in verteilten Systemen gemäß einer Ausführungsform der Erfindung.

Als ein erster Schritt des Verfahrens zum Schützen eines Zugriffs für ein Segment in verteilten Systemen erfolgt ein Erfassen S1 von Zugangsdaten für ein erstes Feldgerät.

Als ein zweiter Schritt des Verfahrens zum Schützen eines Zugriffs für ein Segment in verteilten Systemen erfolgt ein Verifizieren S2 der erfassten Zugangsdaten von einem zweiten Feldgerät, wobei das erste Feldgerät und das zweite Feldgerät zu dem Segment gekoppelt sind.

Gemäß einer Ausführungsform der Erfindung ist vorgesehen, dass mit den Zugangsdaten ein Zugang zu dem ersten Feldgerät und/oder zu dem zweiten Feldgerät ermöglicht wird.

Gemäß einer Ausführungsform der Erfindung ist vorgesehen, dass mit den Zugangsdaten der Zugang mit den Zugangsdaten den Zugang temporär ermöglicht wird.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen.

Bezugszeichen in den Ansprüchen sind nicht als Einschränkungen anzusehen.

## Patentansprüche

1. Vorrichtung zum Schützen eines Zugriffs für ein Segment in verteilten Systemen, wobei die Vorrichtung aufweist:
eine Eingabeeinrichtung (10), welche dazu ausgebildet ist, Zugangsdaten für ein erstes Feldgerät zu erfassen; und
eine Verifizierungseinrichtung (20), welche dazu ausgebildet ist, die erfassten Zugangsdaten von einem zweiten Feldgerät zu verifizieren, wobei das erste Feldgerät und das zweite Feldgerät zu dem Segment gekoppelt sind.

2. Vorrichtung nach Anspruch 1,
wobei die Verifizierungseinrichtung (20) dazu ausgebildet ist, mit den erfassten Zugangsdaten einen Zugang zu dem ersten Feldgerät und/oder zu dem zweiten Feldgerät zu ermöglichen.

3. Vorrichtung nach Anspruch 2,
wobei die Verifizierungseinrichtung (20) dazu ausgebildet ist, mit den erfassten Zugangsdaten den Zugang temporär zu ermöglichen.

4. Vorrichtung nach Anspruch 3,
wobei die Verifizierungseinrichtung (20) dazu ausgebildet ist, mit den erfassten Zugangsdaten den Zugang temporär für eine vorbestimmte Zeitspanne und/oder für eine vorbestimmte Prozesssequenz zu ermöglichen.

5. Vorrichtung nach einem der vorhergehenden Ansprüche, wobei die Verifizierungseinrichtung (20) dazu ausgebildet ist, die erfassten Zugangsdaten für den Zugang zu dem ersten Feldgerät des Segmentes durch alle Feldgeräte des Segments zu verifizieren.

6. Vorrichtung nach einem der vorhergehenden Ansprüche, wobei die Vorrichtung als Security-Server ausgebildet ist.

7. Feldgerät aufweisend eine Vorrichtung nach einem der vorhergehenden Ansprüche.

8. Computernetzwerksegment aufweisend mindestens zwei Vorrichtungen nach einem der vorhergehenden Ansprüche 1 bis 6.

9. Computernetzwerksegment nach Anspruch 8, wobei eine erste Vorrichtung der mindestens zwei Vorrichtungen in das erste Feldgerät implementiert ist und eine zweite Vorrichtung der der mindestens zwei Vorrichtungen in das zweite Feldgerät implementiert ist.

10. Verfahren zum Schützen eines Zugriffs für ein Segment in verteilten Systemen, das Verfahren umfassend folgenden Verfahrensschritte:
Erfassen (S1) von Zugangsdaten für ein erstes Feldgerät; und
Verifizieren (S2) der erfassten Zugangsdaten von einem zweiten Feldgerät, wobei das erste Feldgerät und das zweite Feldgerät zu dem Segment gekoppelt sind.

11. Verfahren nach Anspruch 10, wobei mit den erfassten Zugangsdaten ein Zugang zu dem ersten Feldgerät und/oder zu dem zweiten Feldgerät ermöglicht wird.

12. Verfahren nach Anspruch 11, wobei mit den erfassten Zugangsdaten der Zugang mit den Zugangsdaten den Zugang temporär ermöglicht wird.

13. Computerprogrammprodukt, umfassend Befehle, die bei der Ausführung des Programms durch einen Computer diesen veranlassen, die Schritte des Verfahrens nach einem der Ansprüche 10 bis 12 auszuführen.

14. Computerlesbares Speichermedium, umfassend Befehle, die bei der Ausführung durch einen Computer diesen veranlassen, die Schritte des Verfahrens nach einem der Ansprüche 10 bis 12 auszuführen.

## Claims

1. A device for protecting an access for a segment in distributed systems, the device comprising:
an input device (10) configured to capture access data for a first field device; and
a verification device (20) configured to verify the acquired access data from a second field device, wherein the first field device and the second field device are coupled to the segment.

2. The device according to claim 1,
wherein the verification device (20) is configured to enable access to the first field device and/or to the second field device with the captured access data.

3. The device according to claim 2,
wherein the verification device (20) is configured to temporarily enable access with the captured access data.

4. The device according to claim 3,
wherein the verification device (20) is configured to temporarily enable access for a predetermined period of time and/or for a predetermined process sequence using the acquired access data.

5. The device according to one of the preceding claims, wherein the verification device (20) is configured to verify the acquired access data for access to the first field device of the segment by all field devices of the segment.

6. The device according to one of the preceding claims, wherein the device is designed as a security server.

7. A field device comprising a device according to any one of the preceding claims.

8. A computer network segment comprising at least two devices according to any one of the preceding claims 1 to 6.

9. A computer network segment according to claim 8, wherein a first device of the at least two devices is implemented in the first field device and a second device of the at least two devices is implemented in the second field device.

10. A method for protecting an access for a segment in distributed systems, the method comprising the following method steps:
acquiring (S1) access data for a first field device; and
verifying (S2) the acquired access data from a second field device, wherein the first field device and the second field device are coupled to the segment.

11. The method according to claim 10, wherein the captured access data is used to enable access to the first field device and/or to the second field device.

12. The method of claim 11, wherein access is temporarily enabled with the captured access data.

13. A computer program product comprising instructions which, when the program is executed by a computer, cause the computer to perform the steps of the method according to any one of claims 10 to 12.

14. A computer-readable storage medium comprising instructions which, when executed by a computer, cause the computer to perform the steps of the method according to any one of claims 10 to 12.

## Revendications

1. Dispositif de procection d accès pour un segment dans des systèmes répartis, dans lequel le dispositif comprend :
un dispositif de saisie (10) qui est configuré pour acquérir des données d'accès pour un premier appareil de terrain ; et
un dispositif de vérification (20) qui est configuré pour vérifier les données d'accès acquises à partir d'un second appareil de terrain, dans lequel le premier appareil de terrain et le second appareil de terrain sont couplés au segment.

2. Dispositif selon la revendication 1,
dans lequel le dispositif de vérification (20) est configuré pour permettre un accès au premier appareil de terrain et/ou au second appareil de terrain avec les données d'accès acquises.

3. Dispositif selon la revendication 2,
dans lequel le dispositif de vérification (20) est configuré pour permettre temporairement l'accès avec les données d'accès acquises.

4. Dispositif selon la revendication 3,
dans lequel le dispositif de vérification (20) est configuré pour permettre temporairement l'accès avec les données d'accès acquises pendant un intervalle de temps prédéterminé et/ou pour une séquence de processus prédéterminée.

5. Dispositif selon l'une des revendications précédentes, dans lequel le dispositif de vérification (20) est configuré pour vérifier les données d'accès acquises pour l'accès au premier appareil de terrain du segment par tous les appareils de terrain du segment.

6. Dispositif selon l'une des revendications précédentes, dans lequel le dispositif est configuré comme un serveur de sécurité.

7. Appareil de terrain comprenant un dispositif selon l'une des revendications précédentes.

8. Segment de réseau informatique comprenant au moins deux dispositifs selon l'une des revendications 1 à 6 précédentes.

9. Segment de réseau informatique selon la revendication 8, dans lequel un premier dispositif des au moins deux dispositifs est implémenté dans le premier appareil de terrain et un second dispositif des au moins deux dispositifs est implémenté dans le second appareil de terrain.

10. Procédé de protection d'un accès pour un segment dans des systèmes répartis, le procédé comprenant les étapes de procédé suivantes consistant à :
acquérir (S1) des données d'accès pour un premier appareil de terrain; et
vérifier (S2) les données d'accès acquises à partir d'un second appareil de terrain, dans lequel le premier appareil de terrain et le second appareil de terrain sont couplés au segment.

11. Procédé selon la revendication 10, dans lequel les données d'accès acquises permettent un accès au premier appareil de terrain et/ou au second appareil de terrain.

12. Procédé selon la revendication 11, dans lequel les données d'accès acquises permettent temporairement l'accès avec les données d'accès.

13. Produit de programme informatique, comprenant des instructions qui, lors de l'exécution du programme par un ordinateur, amènent celui-ci à exécuter les étapes du procédé selon l'une des revendications 10 à 12.

14. Support de stockage lisible par ordinateur, comprenant des instructions qui, lors de l'exécution par un ordinateur, amènent celui-ci à réaliser les étapes du procédé selon l'une des revendications 10 à 12.
